# EUROPEAN PATENT APPLICATION

(11) **EP 4 389 400 A1**
(43) Date of publication of application: **26.06.2024**
(21) Application number: 22940966.9
(22) Date of filing: 14.12.2022
(51) Int. Cl.: B29C 64/30, B29C 64/209, B29C 64/393, B29C 35/16, B33Y 40/20, B33Y 30/00

(54) **BLOWER APPARATUS FOR IMPROVING 3D STRUCTURE PRINTING PROCESS**

(30) Priority: 11.11.2022 KR 20220150064
(71) Applicant: T&R Biofab Co., Ltd., Siheung-si, Gyeonggi-do 15073 (KR)
(72) Inventor: KIM, In Ho, Seongnam-si, Gyeonggi-do 13487 (KR); RYU, Chae Hyeon, Seongnam-si, Gyeonggi-do 13487 (KR)
(74) Representative: Caspary, Karsten
(86) International application number: PCT/KR2022/020318
(87) International publication number: WO 2024/101528

(57) **Abstract**

The present disclosure relates to a blowing device for improving three-dimensional (3D) structure printing processing, which may improve printing processability by rapidly solidifying printing material ejected from a nozzle, and is characterized in that it includes a blower jig installed at the lower part of a syringe in which printing material is received and ejected, and having a spraying hole which sprays fluid to reduce the temperature of the printing material ejected from the nozzle of the syringe and around the nozzle to shorten the solidification time of the printing material; and a pneumatic hose connected to the blower jig to deliver the fluid at a normal pressure.

## Description

### [Technical Field]

The present disclosure relates to a blowing device for improving three-dimensional (3D) structural printing processing, and more particularly to a blowing device for improving 3D structural printing processing that may quickly solidify a printing material ejected through a nozzle to improve printing processability.

### [Description of the Related Art]

3D printers are capable of producing complex and varied printout with high efficiency and low cost without the need for post-processing machining.

Up to now, there are many different types of 3D printers that have been developed, but the most popular and widely used is the fused deposition modeling (FDM) 3D printer.

FDM 3D printers melt and eject thermoplastic resin in the form of thin, thread-like filaments through a high-temperature printing nozzle, which is then stacked layer by layer to complete the printout.

The advantage of FDM 3D printers is that their structure and technical operation are relatively simple compared to other types of 3D printers, resulting in lower printer prices, maintenance costs, and repair costs.

In addition, dual nozzle FDM 3D printers, which are equipped with two printing nozzles, may efficiently produce structures with complex patterns using composites composed of two different materials without the need for additional processing.

However, FDM 3D printers have the disadvantage of having a poor surface quality due to crumbling and curvature of the printout, and relatively slow production speed because the printout is completed in an additive manner.

In addition, in order to eject thermoplastic synthetic polymer materials, in the related art, it is necessary to apply heat to the material to melt the material and then eject the material in a highly viscous liquid state. In this case, if the ejected material is not completely solidified, the shape of the structure may be distorted or stacking may not be possible, and to prevent this phenomenon, additional stacking is possible after the material is solidified, which has the disadvantage of requiring a lot of production time depending on the solidification time of the material.

### [References in related art]

(Patent reference 1) Korean Registered Patent Publication No. 1 0-2210721

### [Disclosure of the Invention]

### [Technical Goals]

Therefore, the present disclosure is devised solve the above matters, and the purpose of the present disclosure is to provide a blowing device for improving 3D structure printing processing by installing a blowing device at the nozzle part where the printing material is ejected, so that the fluid ejected through the blower jig of the blowing device may quickly solidify the ejected printing material so that the next layer may be stacked in a short time, so that the structure does not collapse and the surface does not have a curve, and so that the production time may be minimized and the printing processability may be improved.

### [Technical Solutions]

A blowing device for improving 3D structure printing processing according to an example embodiment of the present disclosure for achieving the above purposes may include: a blower jig installed at the lower part of a syringe in which printing material is received and ejected, and having a spraying hole which sprays fluid to reduce the temperature of the printing material ejected from the nozzle of the syringe and around the nozzle to shorten the solidification time of the printing material; and a pneumatic hose connected to the blower jig to deliver the fluid at a normal pressure.

The blower jig may be provided with a hollow pipe connected with a pneumatic hose and supplied with fluid, and may be provided with a spraying body formed at a lower part of the hollow pipe having the spraying hole through which fluid supplied through the pneumatic hose is sprayed.

The hollow pipe may be provided at upper part of the nozzle end of the syringe from which the printing material is ejected.

The hollow pipe may be formed in a circular or U-shape as it wraps around the nozzle of the syringe.

The spraying body may be formed throughout the lower periphery of the hollow pipe, or may be formed in a plurality at regular intervals around the lower periphery, and the spraying body may have at least one spraying hole.

The fluid sprayed through the spraying hole may be compressed air or any one of nitrogen, helium, or carbon dioxide.

The pneumatic hose may be connected to a fluid inlet device operable under the control of the control part.

The spray angle of the spraying hole may be directed inwardly toward the material being ejected.

### [Effects]

As described above, according to a blowing device for improving 3D structure printing processing according to the present disclosure, by installing a blowing device that sprays a fluid at a nozzle area of a syringe in which a printing material is received and ejected, the temperature of the printing material ejected from the nozzle or its surroundings may be lowered by the fluid sprayed from the spraying hole, thereby shortening the solidification time of the printed material, so that the next layer may be stacked in a short time, thereby increasing the printing quality and printing processability of the structure.

### [Brief Description of the Drawings]

FIG. 1 is a front view illustrating an installation of a blowing device for improving 3D structure printing processing according to the present disclosure.
FIG. 2 is a perspective view of an installation of a blowing device for improving 3D structure printing processing according to the present disclosure.
FIG. 3 is a cutaway view of a syringe in which a blowing device is installed to improve 3D structure printing processing according to the present disclosure.
FIG. 4 is a perspective view of a blowing device for improving 3D structure printing processing according to the present disclosure.
FIG. 5 is a front view illustrating a blowing device for improving 3D structure printing processing according to the present disclosure.
FIG. 6 is a bottom view illustrating a blowing device for improving 3D structure printing processing according to the present disclosure.
FIG. 7 is a cutaway view illustrating a blowing device for improving 3D structure printing processing according to the present disclosure.
FIG. 8 is a bottom view illustrating one example of a blowing device for improving 3D structure printing processing according to the present disclosure.
FIG. 9 is a cutaway view of a blowing device according to FIG. 8.
FIG. 10 is a bottom view of another example of a blowing device for improving 3D structure printing processing according to the present disclosure.

### [Detailed Description for Carrying Out the Invention]

The present disclosure is subject to various modifications and may have many example embodiments, certain of which are illustrated in the drawings and further described in the detailed description. However, this is not intended to limit the disclosure to any particular example embodiment and should be understood to include all modifications, equivalents, or substitutions that are within the spirit and scope of the disclosure.

In the drawings, example embodiments of the disclosure are not limited to the particular forms shown and are exaggerated for clarity. Certain terms are used herein for the purpose of describing the disclosure and are not intended to limit the meaning or to limit the scope of the claims of the disclosure.

As used herein, the phrase "and/or" is used to mean including at least one of the components listed before or after. In addition, the expression "connected to/combined with" is used to include being directly connected to another component or being indirectly connected through another component. In this specification, the singular includes the plural unless the context otherwise mentions. In addition, components, steps, operations, and elements referred to as "including" or "comprising" as used in the specification imply the presence or addition of one or more other components, steps, operations, and elements.

In the description of the example embodiments, references to each layer, region, pattern, or structure being formed "on" or "under" the substrate, respective sides, regions, pads, or patterns include both being formed directly or by interposing other layers. The reference to "on"/"over" or "under"/"below" each layer is described with reference to the drawings.

Hereinafter, example embodiments of the present disclosure will be described in detail with reference to the accompanying drawings.

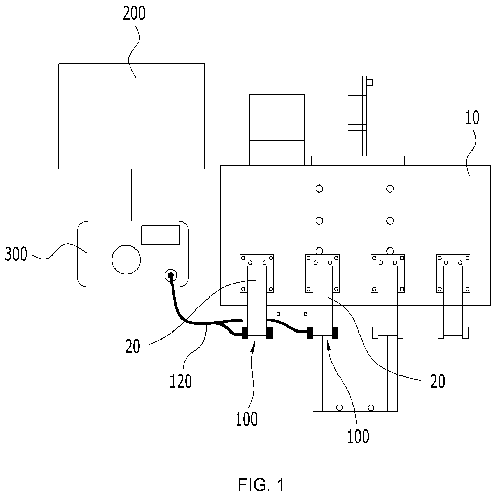

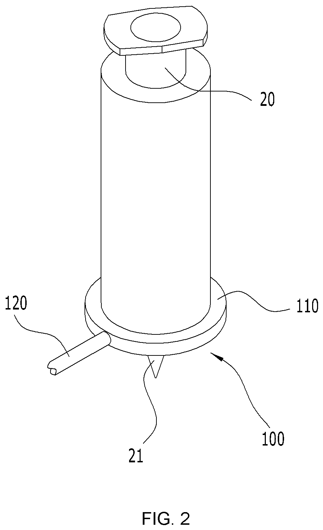

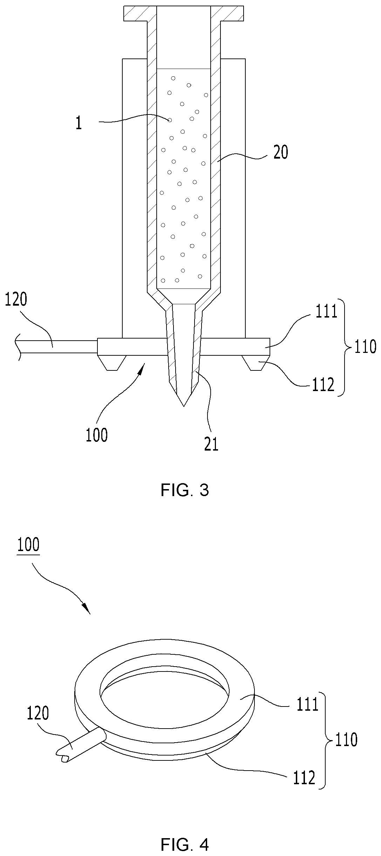

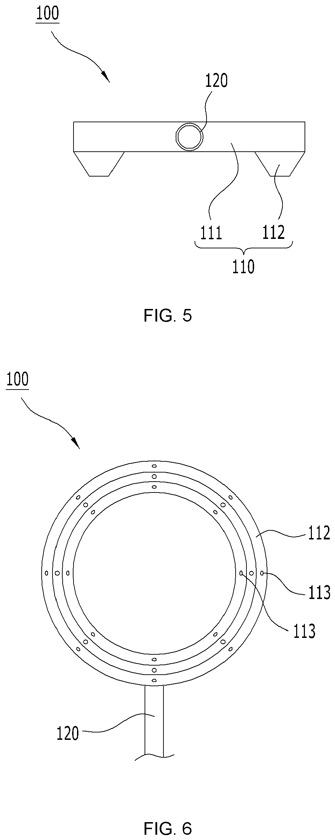

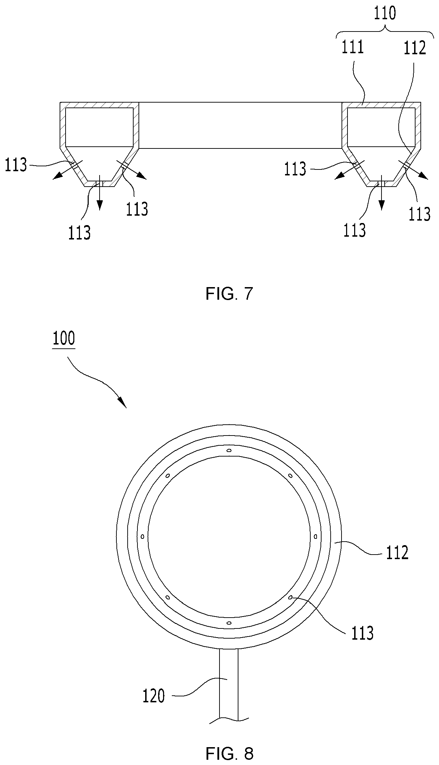

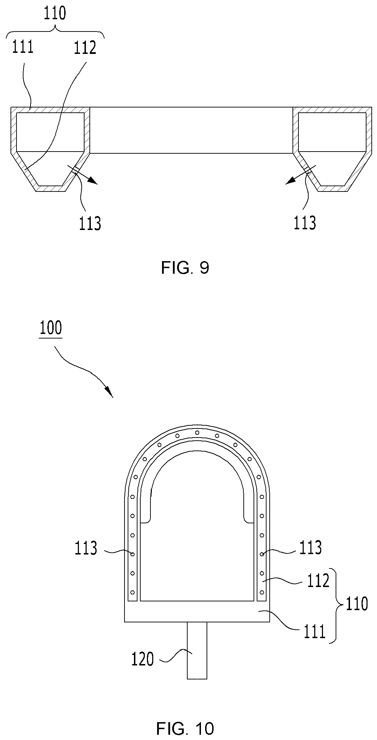

FIG. 1 is a front view illustrating an installation of a blowing device for improving 3D structure printing processing according to the present disclosure; FIG. 2 is a perspective view of an installation of a blowing device for improving 3D structure printing processing according to the present disclosure; FIG. 3 is a cutaway view of a syringe in which a blowing device is installed to improve 3D structure printing processing according to the present disclosure; FIG. 4 is a perspective view of a blowing device for improving 3D structure printing processing according to the present disclosure; FIG. 5 is a front view illustrating a blowing device for improving 3D structure printing processing according to the present disclosure; FIG. 6 is a bottom view illustrating a blowing device for improving 3D structure printing processing according to the present disclosure; FIG. 7 is a cutaway view illustrating a blowing device for improving 3D structure printing processing according to the present disclosure; FIG. 8 is a bottom view illustrating one example of a blowing device for improving 3D structure printing processing according to the present disclosure; FIG. 9 is a cutaway view of a blowing device according to FIG. 8; FIG. 10 is a bottom view of another example of a blowing device for improving 3D structure printing processing according to the present disclosure.

As shown in FIGS. 1 to 10, a blowing device 100 for improving 3D structure printing processing according to the present disclosure is provided at the nozzle 21 part of the syringe 20 where the printing material 1 is received and ejected in the 3D printer head 10, and serves to quickly solidify the printing material 1 by lowering the temperature of the printing material 1 ejeted from the nozzle 21 and around the nozzle.

The printing material 1 used herein may include a thermoplastic polymer, in which the thermoplastic polymer is not particularly limited, but is a polymer capable of having fluid-like flowability through heating, which may include, for example, one or more selected from the group consisting of 3D printable materials such as lactide, caprolactone, glycolide, dioxanone, propylene, ethylene, vinylchloride, butadiene, methyl methacrylate, acrylic acid, 2-hydroxyethlymethacrylate, carbonate, and polyethylene terephthalate, acrylonitrile butadiene styrene (ABS), polycaprolactone (PCL), acrylonitrile-styrene-acrylate (ASA), Stryrene-Acrylonitrile copolymer (SAN), Polystyrene (PS), Polyphenylsulfone (PPSF/PPSU), Polyetherimide, Polylactic acid (PLA), Poly-d-lysine (PDL), and the like.

Furthermore, a blowing device 100 for improving 3D structure printing processing according to the present disclosure may be installed at an upper end of the nozzle 21 of the syringe 20. In this case, the blowing device 100 is preferably provided between the upper end of the nozzle 21 and the lower end of the syringe 20.

As shown in FIG. 4 to 7, the blowing device 100 may include a blower jig 110 and a pneumatic hose 120.

The blower jig 110 is installed at the upper end of the nozzle 21 at the bottom of the syringe 20 where the printing material 1 is received and ejected, and fluid is sprayed to reduce the temperature of the printing material 1 ejected from the nozzle 21 of the syringe 20 and around the nozzle to shorten the solidification time of the printing material 1.

Furthermore, the blower jig 110 may be provided with a hollow pipe 111 connected with a pneumatic hose 120 through which a fluid is supplied, and may be provided with a spraying body 112 having a spraying hole 113 formed in a lower part of the hollow pipe 111 through which a fluid supplied through the pneumatic hose 120 is sprayed. In this case, the spraying body 112 may be integrated with the interior of the hollow pipe 111.

The hollow pipe 111 may be provided at the upper end of the nozzle 21 of the syringe 20 from which the printing material 1 is ejected. Further, the hollow pipe 111 may be formed in a circular shape or a U-shape while wrapping around the nozzle 21 of the syringe 20, but it is preferred that it is formed in various shapes without being limited thereto.

The spraying body 112 may be formed throughout the lower periphery of the hollow pipe 111, or may be formed in a plurality at regular intervals around the lower periphery. Furthermore, at least one spraying hole 113 may be formed in the spraying body 112. That is, the direction in which the fluid is sprayed through the spraying hole 113 may be directed inwardly, where the printing material 1 is ejected according to the printing structure, or it may be directed outwardly, where the material is ejected and solidified due to the continuously moving nozzle 21, so that the fluid may be spread and sprayed over a large area. The spraying hole 113 may be formed in different quantities, angles, and sizes depending on the 3D structure being printed.

It will be appreciated that the fluid sprayed through the spraying hole 113 may be any one of, but not limited to, compressed air, nitrogen, helium, carbon dioxide, and the like.

The pneumatic hose 120 may be connected to the blower jig 110 to supply fluid into the hollow pipe 111. Furthermore, the pneumatic hose 120 may be connected to a fluid inlet device 300 in which fluid is injected according to the spraying pressure under the control of the control part 200. In other words, fluid at a pressure set by the control part 200 is supplied to the pneumatic hose 120 through the fluid inlet device 300 and is sprayed through the hollow pipe 111 and by the spraying hole 113 to spray the fluid according to the 3D structure to be printed. At this time, the fluid introduced through the fluid inlet device 300 may be directly connected to the pneumatic hose 120 and used, so the control part 200 may use it optionally.

The operation state of the blowing device for improving the 3D structure printing processing of the present disclosure including the above structure is as follows.

By installing a blower jig 110 connected with a pneumatic hose 120 at the upper end of the nozzle 21, that is, at the bottom of the syringe 20 in which the printing material 1 is received, when the printing material 1 received in the syringe 20 is ejected through the nozzle 21 and a 3D structure is printed while being stacked, a fluid at a normal pressure is supplied into the hollow pipe 111 through the pneumatic hose 120 and is sprayed through the spraying hole 113, so that the stacked printing material 1 may be quickly solidified as the fluid is sprayed along with the ejection of the printing material 1.

And, since the blowing device 100 is installed at the upper end of the nozzle 21 through which the printing material 1 is ejected, when the printing material 1 is ejected and stacked through the nozzle 21, the spraying hole 113 is located close to the 3D structure being printed, so that the fluid ejected by the spraying hole 113 may quickly reach the 3D structure, and the next layer may be stacked in a short time due to the rapid solidification of the ejected material.

Furthermore, by forming a plurality of spraying holes 113 at certain intervals at the lower end of the spraying body 112, when the fluid supplied inside the hollow pipe 111 is sprayed through the spraying hole 113, the printing material 1 ejected and printed through the nozzle 21 may be solidified evenly, so that no bends occur on the surface of the 3D structure.

In the above detailed description of the disclosure, only particular example embodiments thereof have been described. However, the disclosure should not be understood to be limited to the special forms mentioned in the detailed description, but rather to include all variations, equivalents and substitutes within the spirit and scope of the disclosure as defined by the appended claims.

In other words, the disclosure is not limited to the specific example embodiments and descriptions set forth above, and various modifications may be made by one having ordinary skill in the art to which the disclosure belongs without departing from the spirit of the disclosure as claimed, and such modifications will fall within the scope of protection of the disclosure.

### [Explanation of symbols].

- 10:: 3D printer head
- 20:: Syringe
- 21:: Nozzle
- 100:: Blowing device
- 110:: Blower Jig
- 111:: Hollow pipe
- 112:: Spraying body
- 113:: Spraying hole
- 120:: Pneumatic hose
- 200:: Control part
- 300:: Fluid Inlet Device

## Claims

1. A blowing device for improving three-dimensional (3D) structure printing processing, comprising:
a blower jig installed at the lower part of a syringe in which printing material is received and ejected, and having a spraying hole which sprays fluid to reduce the temperature of the printing material ejected from the nozzle of the syringe and around the nozzle to shorten the solidification time of the printing material; and
a pneumatic hose connected to the blower jig to deliver the fluid at a normal pressure.

2. The blowing device for improving 3D structure printing processing of claim 1, **characterized in that**,
the blower jig is provided with a hollow pipe connected with the pneumatic hose and supplied with fluid, and is provided with a spraying body formed at a lower part of the hollow pipe having the spraying hole through which fluid supplied through the pneumatic hose is sprayed.

3. The blowing device for improving 3D structure printing processing of claim 2, **characterized in that**,
the hollow pipe is provided at upper part of the nozzle end of the syringe from which the printing material is ejected.

4. The blowing device for improving 3D structure printing processing of claim 2, **characterized in that**,
the spraying body is formed throughout the lower periphery of the hollow pipe, or is formed in a plurality at regular intervals around the lower periphery, and the spraying body has at least one spraying hole.

5. The blowing device for improving 3D structure printing processing of claim 1, **characterized in that**,
the pneumatic hose is connected to a fluid inlet device operable under the control of the control part.

6. The blowing device for improving 3D structure printing processing of claim 2, **characterized in that**,
the spray angle of the spraying hole is directed inward, where the material is ejected, and outward, where the material is ejected and solidified by the continuously moving nozzle.
